# EUROPEAN PATENT APPLICATION

(11) **EP 4 822 389 A1**
(43) Date of publication of application: **14.10.2026**
(21) Application number: 25169721.5
(22) Date of filing: 10.04.2025
(51) Int. Cl.: G01S 7/40, G01S 13/00, G01S 13/87, G01S 13/931

(54) **RADAR CLOCK SYNCHRONIZATION BASED ON TEMPERATURE IN A DISTRIBUTED COHERENT RADAR SYSTEM**

(71) Applicant: NXP B.V., 5656 AG Eindhoven (NL)
(72) Inventor: RADJESH, Aishwarya, 5656AG Eindhoven (NL); CHAN, Lu Lu, 5656AG Eindhoven (NL); LOK, Pieteer, 5656AG Eindhoven (NL)
(74) Representative: Schwarzweller, Thomas

(57) **Abstract**

A distributed coherent radar, DCR (100), is disclosed that maintains synchronization between clocks of radars (102, 104). A determination is made that a first radar (102) is being started up or a mode of the first radar is being changed. A measured temperature indicative of a temperature of a digitally controlled crystal oscillator, DCXO (118,130), of the first radar is obtained based on the determination. A DCXO control setting of the DCXO of the first radar is identified based on the temperature to reduce a frequency drift of the DCXO of the first radar and frequency drift difference between the DCXO of the first radar and DCXO of a second radar (104). The DCXO of the first radar is adjusted with the DCXO control setting. The DCXO of the first radar and DCXO of the second radar indicates timing for clocks of respective radars and the adjustment maintains the synchronization between the clocks.

## Description

### FIELD OF USE

The present disclosure relates generally to a distributed coherent radar (DCR) system, and more particularly, to a system, method, and apparatus for radar clock synchronization based on temperature in the DCR system.

### BACKGROUND

In regular radar operation, also known as mono-static mode, a single radar transmits and receives back its own signal, extracting sensing measurement information about an environment. In a distributed coherent radar system, there is a bi-static mode in which distributed coherent radars further receive each other's transmitted signals and is able to extract more sensing measurement information from the environment compared to the mono-static mode. Coherency of the radars is needed for this bi-static mode of operation, defined as having a time and frequency synchronization between clocks of each radar within an accuracy less than 100 ns so that a chirp sequence transmitted by the radars is able to be started at a same time, among other reasons. Each radar has a crystal oscillator (XO) which outputs a frequency signal which drives a respective clock used to maintain a time. Then, a protocol such as generic precision time protocol (gPTP) defined by Institute of Electrical and Electronic Engineers (IEEE) 802.1 AS is applied to synchronize the clocks of the radars to have a same time as a so called "grandmaster clock", which for example could be a clock of an electronic control module (ECM) which controls the radars. Under normal temperature conditions, using gPTP and the XO, the clocks of the radars are synchronized in time within time offsets less than the 100ns.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 illustrates a distributed coherent radar system in accordance with one or more embodiments.
FIG. 2 illustrates an example lookup table stored in the memory of a radar to control frequency drift of a digitally controlled crystal oscillator (DCXO) in accordance with one or more embodiments.
FIG. 3 illustrates an example crystal characteristic curve in accordance with one or more embodiments.
FIG. 4 illustrates an example frequency drift adjustment to DCXO control setting curve in accordance with one or more embodiments.
FIG. 5 illustrates another example lookup table stored in the memory of a radar to control frequency drift of a digitally controlled crystal oscillator (DCXO) in accordance with one or more embodiments.
FIG. 6 is an example flow chart of functions associated with clock synchronization in accordance with one or more embodiments.

### DETAILED DESCRIPTION

The detailed description of the appended drawings is intended as a description of the currently preferred embodiments of the present disclosure, and is not intended to represent the only form in which the present disclosure may be practiced. It is to be understood that the same or equivalent functions may be accomplished by different embodiments that are intended to be encompassed within the scope of the present disclosure.

Startup of a radar or a radar mode change (for example: switching between long-range mode and short-range mode in the radar) causes an increase in temperature of a crystal oscillator (XO) in the radar. The increase in temperature leads to a frequency drift of the XO at a higher rate (> 0.85 ppm/s) from a nominal frequency. Also, depending on the implementation of the XO and the initial temperature, frequency drift of the XOs in the different radars vary. An electronic control module (ECM) that controls the time offset between the radars based on gPTP is not able to maintain time synchronization of respective clocks of the radars within the requirements for distributed coherent radar (DCR) algorithms due to the frequency drift of the XO and frequency drift difference between XOs in a short period of time. The radars are inoperable for the bi-static mode in the DCR system during the start-up and radar mode change scenarios until the frequency drift and frequency drift difference reduce to below a predetermined level.

Embodiments disclosed herein are directed to radars which use a digitally controlled crystal oscillator (DCXO) and reducing a frequency drift of a DCXO and frequency drift difference between the DCXOs of the radars based on measuring a temperature indicative of temperature of the DCXO and controlling the DCXO based on the measured temperature. By reducing the frequency drift of the DCXO and frequency drift difference between the DCXOs of the radars, the clocks of the radars are time synchronized and frequency synchronized between each other and in some embodiments with the ECU so that the radars are able to operate in the bi-static mode. To achieve this synchronization, a radar stores in a look up table an indication of a DCXO control setting of a DCXO in the radar. The DCXO control setting corresponds to a temperature indicative of temperature of the DCXO. In some embodiments, the control setting in the lookup table may also correspond to a temperature indicative of temperature of another DCXO in another radar. The lookup table is accessed based on the one or more temperatures and a DCXO control setting is determined for the one or more temperatures and applied to the DCXO. This process is performed for each radar to reduce a frequency drift of a DCXO and frequency drift difference between the DCXOs of the radars during startup of the radar or a radar mode change. Further, the clocks of the radars during the start-up and radar mode change are synchronized with each other and the radars are able to operate in the bi-static mode. In some embodiments, the clocks (DCXO's) of the radars are synchronized to each other within a 1 ppm (target). Well known instructions, protocols, structures, and techniques have not been shown in detail in order not to obfuscate the description.

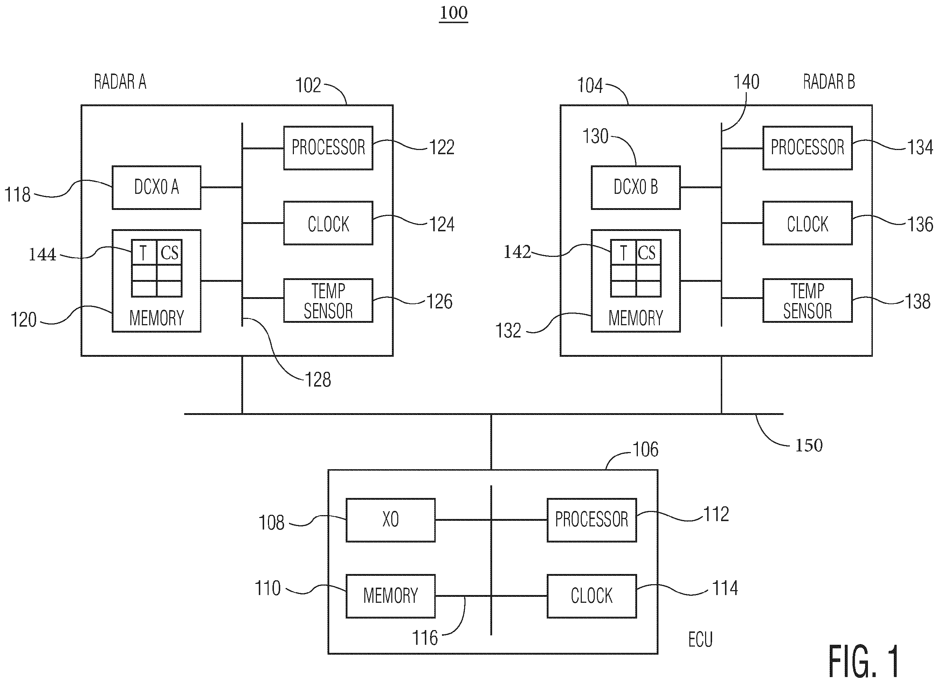

FIG. 1 illustrates a distributed coherent radar (DCR) system 100 in accordance with one or more embodiments. The distributed coherent radar system 100 includes a first radar 102 and a second radar 104 which are spatially separated and an electronic control unit (ECU) 106 which controls operation of the first radar 102 and second radar 104. Reflected signals are then processed by the respective radars that transmitted the signal to detect the presence of objects in mono-static mode. The signals output by the plurality of radars such as chirp signals may be time and frequency synchronized in the distributed coherent radar system 100. When the plurality of radars are time and frequency synchronized, reflected signals are then received and processed by both radars in a so called bi-static mode of operation for an increased level of detection of the presence of obj ects. The ECU 106 may be coupled to the radars 102, 104 by a communication path 150 to exchange control information associated with operation of the radar 102, 104 including messaging associated with maintaining the synchronization between the radars and between the radars and the ECU 106 and signaling start, stop, and mode changes of the radar such as transition from long range detection to short range detection and vice versa based indications from higher layer applications that control operation of the DCR system. In some embodiments, the distributed coherent radar system 100 may include more than two radars which output synchronized signals and principles of the disclosed invention may be extended to the two or more radars.

Institute of Electrical and Electronic Engineers (IEEE) 802.1AS generic precision time protocol (gPTP) is a synchronization protocol used to achieve accurate and precise time and frequency synchronization between a gPTP grandmaster and a gPTP slave in the distributed coherent radar system. In gPTP, the radars 102, 104 may be referred to as the gPTP slaves and the ECU 106 may be referred to as the gPTP grandmaster and each of the master and slaves may have a respective clock. In some embodiments, the gPTP grandmaster may be one of the radars 102, 104 or another module in the system 100. The clock may maintain a respective time such as time of day (ToD) of a radar. For example, radar 102 may have clock 124, radar 104 may have clock 136, and the ECU 106 may have clock 114. gPTP operates by the master and slaves exchanging messages over the communication path 150 so the clocks of the slaves are time synchronized. The time synchronization may be an alignment of the clocks ensuring they measure time at a same point in time. The ECU 106 and radars 102, 104 may further include a respective processor or core and memory such as one or more of random access memory and non-volatile memory which store code executed by the processor or core to execute the gPTP. For example, radar 102 may have processor 122 and memory 120, radar 104 may have processor 134 and memory 132, and ECU 106 may have processor 112 and memory 110. The radar 102, 104 and ECU 106 may be implemented by one or more of analog circuitry, mix signal circuitry, memory circuitry, logic circuitry, and processing circuitry that executes code stored in a memory to perform disclosed functions on one or more integrated circuits.

The ECU 106 and each of the radars 102, 104 may have a digitally controlled crystal oscillator (DCXO) which drives a respective clock to maintain clock timing. For example, radar 102 may have a DCXO 118, radar 104 may have a DCXO 130, and ECU 106 may have XO 108 as shown or a DCXO (not shown). The XO is a crystal oscillator which outputs a signal at a nominal frequency while the DCXO is a crystal oscillator which outputs a signal at a nominal frequency but whose frequency drift over time from the nominal frequency can be controlled digitally, e.g., output frequency generation is controlled by a bit binary word (DCXO control setting) and the frequency stability is achieved by means of the PLL (phase-locked loop) control loop. Transitions of a clock are defined by the frequency of the DCXO or XO. Each DCXO or XO will output a signal at a nominal frequency which is the same but each have its own characteristics including a frequency drift which is a variation in frequency of the XO or DCXO from the nominal frequency over time. The DCXO is typically expected to have +/- 70 ppm characteristics where a ppm is a 1 Hz change in frequency for every 1 MHz of frequency. A frequency drift and a frequency drift difference between DCXOs impacts the clock timing and resulting time and frequency synchronization between the ECU 106 and one radar and the time and frequency synchronization between radars 102, 104. The time synchronization is an absolute time synchronization between clocks and the frequency synchronization is a further alignment of the clocks ensuring they increase time at a same rate. If the frequency drift is similar in both of the radars 102, 104, then the clocks of the radars and the ECU 106 are time and frequency synchronized and a same time and frequency offset is expected between the ECU 106 and radar 102 if a time offset and frequency offset between the ECU 106 and a radar 104 changes.

In one or more embodiments, the DCXO 118, memory 120, processor 122, clock 124 and temperature sensor 126 may be communicatively coupled by an example interconnect 128 to perform functions of the radar 102. In one or more embodiments, the DCXO 130, memory 132, processor 134, clock 136 and temperature sensor 138 may be communicatively coupled by an example interconnect 140 to perform functions of the radar 104. In one or more embodiments, the XO 108, memory 110, processor 112, and clock 114 may be communicatively coupled by an example interconnect 116 to perform functions of the ECU 106. In some embodiments, the XO 108 may be a DCXO. Each interconnect may be a bus structure, trace, or other communications means.

Under normal temperature conditions, one or more of the clocks 124, 136, 114 of the radars 102, 104 may be synchronized in time with less than a 100ns offset based a synchronization process such as gPTP. During startup of the radars 102, 104, e.g., vehicle startup when the radars are in an automobile, or during a radar mode change, e.g., switching between long-range mode and short-range mode in the radar based on signaling by an application, the temperature of a DCXO increases causing a frequency drift of the DCXO to increase. Also, depending on the characteristics of a crystal of a DCXO and the initial temperature, the DCXO 118 and DCXO 130 in different radars 102, 104 may have each have a frequency drift and frequency drift difference between radars. The frequency drift of a DCXO of a radar affects resulting time of a clock of the radar and time rate of change of the clock of the radar and the frequency drift difference between radars affects time and frequency synchronization between the radars 102, 104. In some embodiments, the ECU 106 is not able to achieve time and frequency synchronization between the clocks within the requirements for the bi-static mode in distributed coherent radar (DCR) algorithms based on the time synchronization algorithm such as gPTP due to the frequency drift of each of the DCXOs and high frequency drift difference between DCXOs in a short period of time. The radars are thus inoperable for bi-static operation during the start-up and radar mode change scenarios until the frequency drift of the DCXO and the frequency drift difference between DCXOs of the radars are reduced.

Embodiments disclosed herein are directed to adjusting a frequency drift of each of the DCXOs 118, 130 of the radars 102, 104 based on temperature measurements so a frequency drift difference between the DCXOs of the radars 102, 104 is reduced and the clocks 124, 136 of the radars 102, 104 are time and frequency synchronized with the clock 114 of the ECU 106. Each radar may have a temperature sensor that measures an indication of temperature of its DCXO. For example, radar 102 may have temperature sensor 126 to measure an indicative temperature of the DCXO 118 and radar 104 may have temperature sensor 138 to measure an indicative temperature of the DCXO 130. The temperature sensor may have an accuracy such as 0.1 degree accuracy. The memory of a radar may further store an indication of a corresponding DCXO control setting (CS) for different temperatures (T) which is used to identify respective DCXO control setting to apply to the DCXO of the radar. For example, the memory 120 may store a lookup table 144 having a respective DCXO control setting CS for a temperature T and the memory 132 may store a lookup table 142 having a respective DCXO control setting CS for a temperature T. Each radar may determine an indicative temperature of its DCXO and configure the DCXO control setting of its DCXO at a same time based on the indicative temperature so that each DCXO has a frequency drift and frequency drift difference between DCXOs which improves time and frequency synchronization between clocks of the radars. In some embodiments, the radar may additionally determine an indicative temperature of a DCXO of another radar. The radar may configure the DCXO control setting of its DCXO based on the indicative temperature of its DXCO and indicative temperature of the DCXO of the other radar as well based on a corresponding lookup table.

In one or more embodiments, the radar 102 and radar 104 may be synchronized which results in the ECU 106 being time and frequency synchronized with the radar 102 and 104 during the startup of the radars 102, 104 or during the radar mode change. By synchronization, a time difference (time synchronization) and time rate of change difference (frequency synchronization) of the clocks of the radars 102, 104 and clocks with the ECU 106 may be reduced.

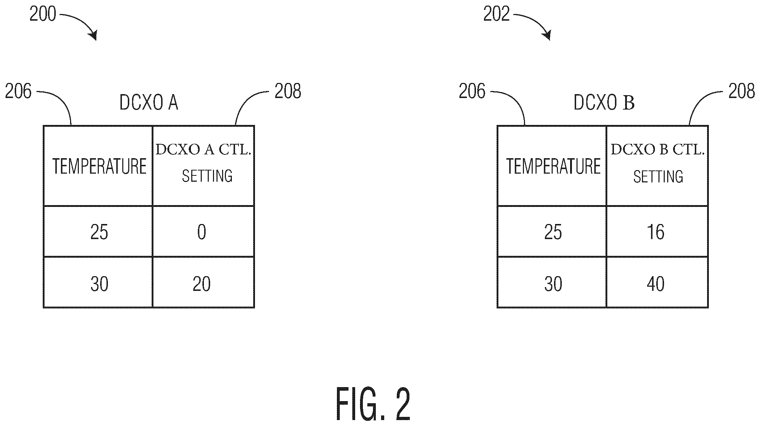

FIG. 2 illustrates an example lookup table 200, 202 which is stored in the memory of a radar to control frequency drift of a DCXO in accordance with one or more embodiments. In one or more embodiments, each look up table 200, 202 may have a plurality of fields. The fields may include a column 206 which indicates a temperature of the DCXO indicated by a temperature sensor and column 208 which indicates a corresponding DCXO control setting for a DCXO to reduce a frequency drift of the DCXO. For example, when the temperature of a DCXO A 118 in radar 102 measured by the temperature sensor 126 is 30°C, then the lookup table 200 for the DCXO A 118 may indicate that a respective DCXO control setting of 20 is to be applied to the DCXO A 118 to reduce a frequency drift to a predefined level such as 0 ppm. For example, when the temperature of a DCXO B 130 in radar 104 measured by the temperature sensor 138 is 30°C, then the lookup table 202 for the DCXO B 130 may indicate that a respective DCXO control setting of 40 is to be applied to the DCXO B 130 to reduce frequency drift to the predefined level such as 0 ppm. The DCXO control settings indicated may be applied to a respective DCXO so that a frequency drift of a DCXO is reduced and a frequency drift difference between DCXOs is less than a threshold amount compared to applying a default DCXO control setting. In one or more embodiments, the processor of the radar may obtain from the temperature sensor an indication of the temperature and then access the lookup table to determine the DCXO control setting for the DCXO. Then, the processor may provide this DCXO control setting to the DCXO to adjust the frequency drift of the DCXO. Based on application of the respective control settings, the DCXOs of the radars 102, 104 will also have a similar frequency drift and reduced frequency drift difference. The time and rate of time of clocks of the radar which are driven by the respective DCXOs may be adjusted to result in time and frequency synchronization of the clocks of the radars 102, 104 and between the radars 102, 104 and the ECU 106.

In one or more embodiments, the lookup table for a DCXO may be populated during run time. After the mode change of a radar or startup of the radar and when the temperature of the radar is stable, the radar or ECU may determine a DCXO control setting of each DCXO which achieves a time and frequency synchronization between the radars. This DCXO control setting is then stored in the look up table associated with the DCXO and for the measured temperature of the DCXO. This process is repeated to populate the lookup table with DCXO control settings for different temperatures of the DCXO. In some embodiments, the temperature that is measured and stored in the lookup table may be indicative of the temperature of the DCXO. In some embodiments as described in more detail below, the temperature that is measured and stored in the lookup table may also be indicative of the other DXCO.

In one or more embodiments, the lookup table for a DCXO may be populated offline or during a configuration phase by the ECU 106 and the radars 102, 104. The DCXO control setting for a DCXO in a radar for different temperatures may be defined by a crystal characteristic curve and a frequency drift adjustment to DCXO control setting curve of the DCXO. The crystal characteristic curve is defined during a manufacturing or testing process for the DCXO and indicate a ppm variation of the DCXO as a function of temperature. The frequency drift adjustment to DCXO control setting curve of the DCXO is also defined during the manufacturing or testing process for the DCXO and indicates a DCXO control setting to adjust a frequency drift by a determined amount so that the frequency of the DCXO is at the nominal frequency within a frequency drift less than a threshold amount. The curves may be used to determine a DCXO control setting for a temperature of a DCXO so that a frequency drift of the DCXO and frequency drift difference between DCXOs is the threshold amount.

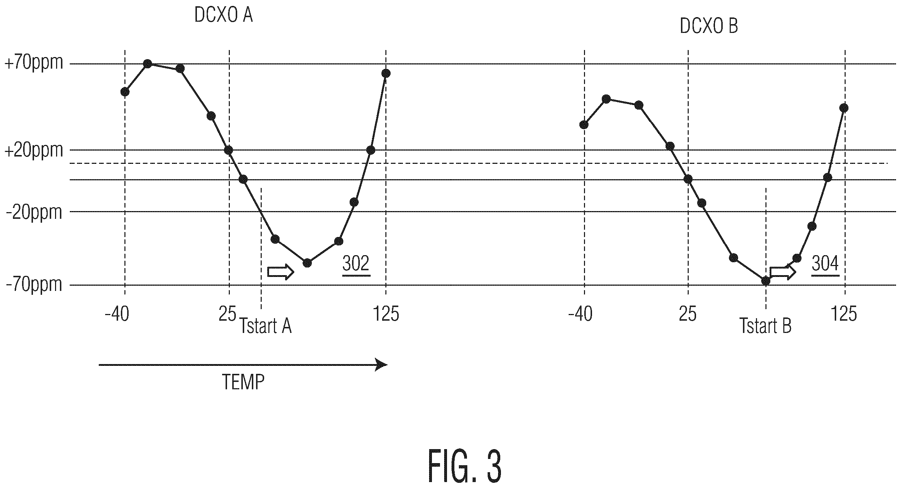

FIG. 3 illustrates an example crystal characteristic curves 302, 304 of a respective DCXO in accordance with one or more embodiments. The crystal characteristic curve may indicate a parts-per-million frequency drift of the DCXO as a function of the DCXO temperature. For example, a 70 ppm drift may mean the frequency of the DCXO may vary up to 70 Hz for every 1 MHz of frequency. The DCXO of each radar may have a respective crystal characteristic curve, e.g., curve 302 for DCXO A 118 and curve 304 for DCXO B 130. In an example, the crystal characteristic curves 302, 304 may indicate that DCXO A 118 may have a +20 ppm drift for a temperature of 25 degrees and the DCXO B 130 may have a 0 ppm drift for a temperature of 25 degrees when no DCXO control setting or a default setting is applied to the DCXOs.

The frequency drift of the DCXO when the DCXO is at certain temperature may determine a DCXO control setting that should be applied to the DCXO to maintain a certain frequency drift such as 0 ppm. The frequency drift adjustment to DCXO control setting curve of the DCXO may indicate this DCXO control setting.

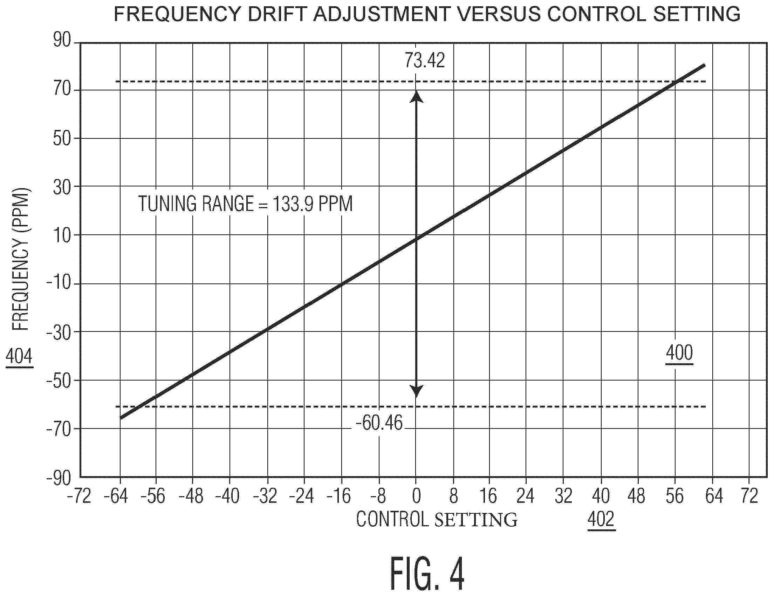

FIG. 4 illustrates an example frequency drift adjustment to DCXO control setting curve 400 to determine the DCXO control setting of the DCXO in accordance with one or more embodiments. The curve 400 illustrates a frequency drift over a range from -60 to 70 ppm on axis 404 and a corresponding DCXO control setting to achieve the frequency drift correction on axis 402. In one or more embodiments, a crystal characteristic curve may indicate that a DCXO has a particular frequency drift when the DCXO is at a temperature. A determination is made what is the DCXO control setting along the axis 402 that intersects with the curve 400 to achieve the desired frequency drift adjustment. The DCXO control setting applied to the DCXO will result in adjusting the frequency drift of the DCXO by the adjusted frequency drift associated with the DCXO control setting. For example, the frequency drift of the DCXO A 118 may be reduced from a current frequency drift of +20 ppm indicated by the curve 302 at the temperature of 25 degrees to zero by applying a DCXO control setting -24 indicated by the curve 400 to the DCXO corresponding to a frequency drift adjustment of -20 ppm resulting in a 0 ppm frequency drift. Similarly, the frequency drift of the DCXO B 130 of 0 ppm at 25 degrees may be maintained at 0 ppm by applying a DCXO control setting -8 indicated by the curve 400 to the DCXO which corresponds to an adjustment of 0 ppm. The DCXO control settings allows for controlling a frequency of each DCXOs and a frequency drift difference between DCXOs to achieve a time and frequency synchronization between clocks of the radars. The indicated DCXO control setting is inserted into a table similar to the table 200, 202 for the temperature of the DCXO to control the frequency drift to the desired frequency drift at the temperature. This process is repeated for each DCXO to control a frequency drift difference between DCXOs and achieve time and frequency synchronization between clocks of the radars. In one or more embodiments, the DCXO control setting for each DCXO may be set so that each DCXO has a same frequency drift and reduced frequency drift difference. This way the clock of the ECU will be time synchronized and frequency synchronized with the clocks of the radars and the clocks of the radars may be time and frequency synchronized.

In some embodiments, the radar may not have a lookup table which stores a DCXO control setting in the memory for a measured temperature. Instead, a polynomial equation may be used to calculate the DCXO control setting based on the measured temperature of the DCXO. Coefficients of the polynomial equation may be defined based on characteristics of the frequency drift adjustment to DCXO control setting curve 400 and crystal characteristic curves 302, 304 and relationship between temperature and DCXO control setting for the DCXO. The storage of coefficients may consume less space than storage of the DCXO control settings with a tradeoff of computation to be performed by the processor to determine the DCXO control setting.

In some embodiments, the DCXO control setting of one radar may be also based on an indication of a temperature of a DCXO of another radar. The temperature of the DCXO of the radars may be measured at a same time. Based on the measured temperatures, the DCXO control setting is determined and the clocks of the two or more radars may be synchronized with a timing toward each other (e.g., closer to each other). The tables 200, 202 may be modified to indicate the updated DXCO control settings.

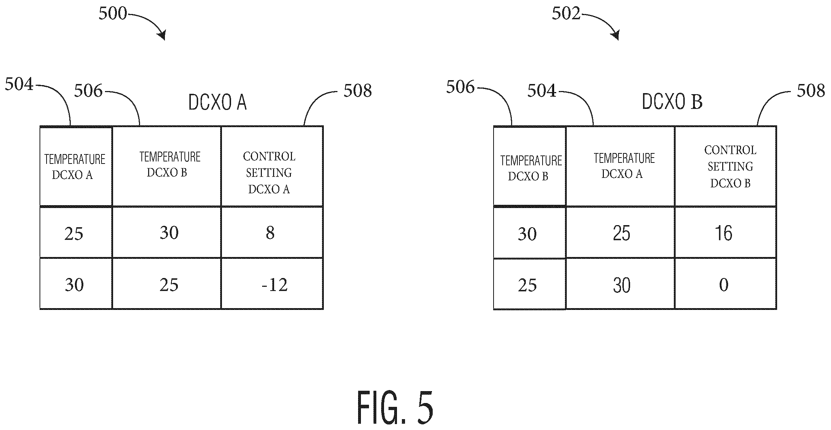

FIG. 5 illustrates another example lookup table 500, 502 which is stored in the memory of a radar to control frequency drift of a DCXO in accordance with one or more embodiments. In one or more embodiments, each look up table 500, 502 may have a plurality of fields. The fields may include a column 504 which indicates a temperature of the DCXO A in one radar A and column 506 which indicates a temperature of DCXO B in another radar B. Column 508 may indicate a control setting for the DCXO A in the radar A which is based on the temperatures indicative of the temperature of the DCXO A and DCXO B. For example, when the temperature of a DCXO A 118 in radar 102 measured by the temperature sensor 126 is 30°C and the temperature of a DCXO B 130 in radar 104 measured by the temperature sensor 128 is 25°C then the lookup table 500 for the DCXO A 118 may indicate that a respective DCXO control setting of -12 is to be applied to the DCXO A 118 to reduce a frequency drift to a predefined level such as 0 ppm. The DCXO control setting indicated may be applied to the DCXO so that a frequency drift of the DCXO is reduced and a frequency drift difference between DCXOs is less than a threshold amount compared to applying a default DCXO control setting. In one or more embodiments, the processor of the radar may obtain an indication of the temperature of another radar based on signaling to the other radar and then access the lookup table to determine the DCXO control setting for the DCXO. Then, the processor may provide this DCXO control setting to the DCXO to adjust the frequency drift of the DCXO. Based on application of the respective control settings, the DCXOs of the radars 102, 104 will also have a similar frequency drift difference. The time and rate of time of clocks of the radar which are driven by the respective DCXOs may be adjusted to result in time and frequency synchronization of the clocks of the radars 102, 104 and between the radars 102, 104 and the ECU 106. The clocks (DCXO's) of the radars may be synchronized to each other within 1ppm (target) and not necessarily to the clock of the grandmaster because this would require a too large tuning range of the DCXO's.

In some embodiments, the temperature that is measured and stored in the lookup table 500, 502 may be indicative of the temperature of the DCXO which in some cases is the DCXO temperature itself. In one or more embodiments, the control setting defined in the table 502, 504 may be determined based on the ppm variation of each DCXO indicated by an example crystal characteristic curve of each DCXO and a frequency drift adjustment to DCXO control setting curve which indicates the control setting based on the ppm variations of a plurality of DCXOs. In other embodiments, the control setting may be determined based on a polynomial equation that is used to calculate the DCXO control setting of a radar based on the measured temperatures of the radar and another radar. In some embodiments, the lookup table 500, 502 may be stored in the ECU 106. Each radar may send a respective temperature associated with its DCXO to the ECU 106 and the ECU 106 based on a lookup table 500, 502 may indicate the control setting of the DCXO of each of the radars.

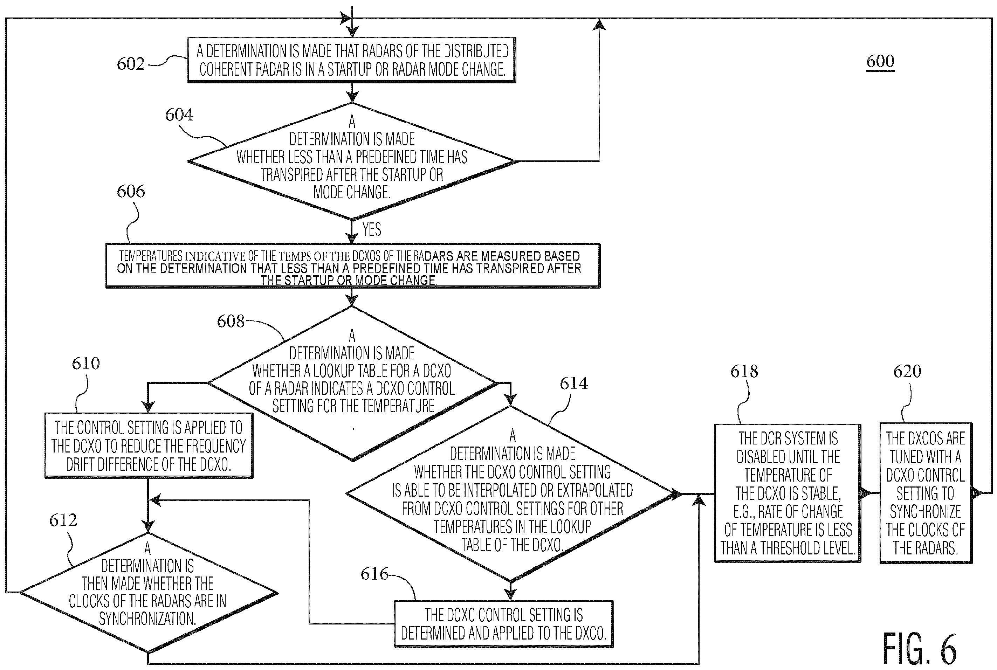

FIG. 6 is a flow chart of functions 600 associated with clock synchronization in accordance with one or more embodiments. The functions as described herein may be performed via the processor and memory of one or more of the ECU 106 and the radars 102, 104.

At 602, a determination is made that radars of the distributed coherent radar are in a startup or radar mode change. The radar may receive from the ECU via the communication path an indication that the DCR system is to start up or change mode. The change mode may result from a radar transitioning from a short range to long range mode or vice versa and the startup mode may be mode when a radar is activated for operation. In one or more embodiments, a higher level software application that controls the DCR system may provide this indication.

The temperature of a DCXO of a radar may change at a high rate during the startup or radar mode change resulting in frequency drift of the DCXO which exceeds a predefined rate during these modes of operation. Further, the DCXO of different radars may have a frequency drift which drifts at different rates depending on its temperature. The DCXO control setting of a DCXO may need to be adjusted so that the frequency drift difference between DCXOs is reduced and the clocks of the radars remain time and frequency synchronized during a period of time around the mode change.

At 604, a determination is made whether less than a predefined time has transpired after the startup or mode change. Based on its clock the radar may determine the time transpired and the predetermined time may be 10 seconds in an example. DCXO control settings may only be applied to DCXOs during this predetermined time so that the radars are synchronized and able to operate in a bi-static mode during this startup or mode change and during a time when the temperature of the DCXOs has not stabilized. Otherwise, processing returns to step 602 based on the determination that not less than a predefined time has transpired after the startup or mode change.

At 606, temperatures indicative of temperature of the DCXOs of the radars are measured based on the determination that less than a predefined time has transpired after the startup or mode change. The processor of a radar may receive a temperature from its respective temperature sensor.

In one or more embodiments, a DCXO control setting of a DCXO of a radar may be adjusted based on the temperature of the DCXO. In some embodiments, the control setting may be based on also the temperature of a DCXO of another radar. The adjustment may be based on using the entries of a lookup table of the DCXO or based on an extrapolation or interpolation of the entries in the lookup table. In other examples, the adjustment may be based on a mathematical computation.

In one or more embodiments, entries of the lookup table may be populated with a DCXO control setting as a function of temperature. Steps 608-612 relate to adjusting the DCXO control setting of the DCXO directly based on a temperature using the entries of the lookup table. These steps may be performed by a processor of the radar in an example.

At 608, a determination is made whether a lookup table for a DCXO of a radar indicates a DCXO control setting for the temperature. The temperature may be a temperature associated with the radar and in some embodiments temperature associated with another radar. If there is a DCXO control setting for the temperature, then at 610 the control setting is applied to the DCXO to reduce the frequency drift of the DCXO. This process is repeated for each DCXO. Then, at 612, a determination is then made whether the clocks of the radars are in synchronization and a frequency drift difference between DCXOs of different radars are less than a threshold amount. The ECU may compare one or more of a time of the clocks of the radars and time rate of change between the clocks of the radars obtained by a messaging process. Processing returns back to 602 if the clocks are time and frequency synchronized validating the lookup table entries. If the clocks are not synchronized, then bi-static radar processing is stopped and processing continues to step 618. As the bi-static DCR radar operation will not be reliable in this situation, the radar continues to operate only in the mono-static mode. In one or more embodiments, an indication is output to the ECU or higher level application software that the DCR is to operate in the mono-static mode until a rate of change of the temperature is less than a threshold level.

Steps 614-616 relate to adjusting the DCXO control setting of the DCXO indirectly based on the temperature of the DCXOs using the entries of the lookup tables of the DCXO. These steps may be performed by a processor of the radar in an example.

If there is no DCXO control setting for the temperature of the DCXO, then at 614 a determination is made whether the DCXO control setting is able to be interpolated or extrapolated from DCXO control settings for other temperatures in the lookup table of the DCXO. The DCXO control setting may be determined if a DCXO control setting is defined for a temperature in the lookup table of the radar and is in a defined range of the measured temperature. If the DCXO control setting is able to be determined then at 616 the DCXO control setting is determined and applied to the DCXO. Then, at 612, a determination is then made whether the clocks are synchronized. The ECU may compare one or more of a time of the clocks of the radars and time rate of change between the clocks of the radars. Processing returns back to 602 if the clocks are synchronized validating the lookup table entries. If the clocks are not synchronized, then bi-static mode radar processing is stopped and processing continues to step 618. The bi-static mode radar processing will not be reliable until conditions for bi-static mode is met. In one or more embodiments, an indication is output to the ECU or higher level application software that the DCR is to operate in the mono-static mode until a rate of change of the temperature is less than a threshold level.

Steps 618-620 relate to populating entries of the lookup table. If the DCXO control setting cannot be determined based on the lookup table or the clocks are not synchronized based on DCXO control setting that is applied to the DCXOs, then a DCXO control setting in the lookup table for a radar may not be correct. At 618, the bi-static operation in the DCR system is disabled and only the mono-static mode of the radars is operational until the temperature of the DCXO is stable, e.g., rate of change of temperature is less than a threshold level. The determination is made by the ECU that the temperature is stable which implies that the frequency drift of the DCXOs are also stable. For example, the temperature is stable when the DCR is operating for an extended period of time such as more than 10 seconds. At 620, the DCXOs are tuned with a DCXO control setting to synchronize the clocks of the radars. In one or more embodiments, the control setting is adjusted and synchronization checked in one more iterations based on gPTP to synchronize the clocks in time and frequency. The DCXO control setting cause a respective frequency drift of a DCXO and the frequency drift difference between the DCXOs to be reduced and clocks of the radars to be time and frequency synchronized. These settings are entered into the respective lookup table of the DCXOs which is then used during the startup or mode change to operate in the bi-static mode and improve the synchronization of clocks of the radars during the mode change or startup based on use of the lookup table. Processing then returns back to step 602.

In one or more embodiments, the tuning process performed in step 620 may involve the ECU requesting an indication of a time from a clock of a radar over a period of time and determining a time rate of change of the clock of the radar. The ECU may then determine a DCXO control setting for a DCXO by an iterative process in an example to synchronize the clock of the radar with one or more of the clock of the ECU and another radar. The ECU may also request from a radar a temperature of the DCXO via the communication path and store in a lookup table for the radar a DCXO control setting for the temperature of the radar. This process may be repeated for each radar to populate respective lookup tables of the radars and time and frequency synchronization may be maintained by a time synchronization algorithm such as gPTP. As entries in the lookup tables are populated, the entries in the lookup tables may be used to adjust frequency drift during the startup or mode change and maintain the synchronization. Further, older entries may also get replaced over time in the lookup table because slow processes like aging might change a needed DCXO control setting to achieve the synchronization.

In one or more first embodiments, a method performed by a distributed coherent radar (DCR) system to maintain synchronization between clocks of two or more radars in the DCR system is disclosed. The method includes: determining that a first radar is being started up or a mode of the first radar is being changed; obtaining a measured temperature based on the determination, the measured temperature indicative of a temperature of a digitally controlled crystal oscillator (DCXO) of the first radar; identifying a DCXO control setting of the DCXO of the first radar based on the measured temperature to reduce a frequency drift of the DCXO of the first radar and frequency drift difference between the DCXO of the first radar and DCXO of a second radar; and adjusting the DCXO of the first radar with the DCXO control setting, wherein the DCXO of the first radar and DCXO of the second radar defines a timing for clocks of respective radars and the adjustment maintains the synchronization between the clocks. In one or more embodiments, determining that the first radar is being started up or the mode of the first radar is being changed includes receiving an indication of the startup or radar mode change of the distributed coherent radar system from an application controlling the DCR system. In one or more embodiments, determining that the first radar is being started up or the mode of the first radar is being changed further includes determining that less than a predetermined time has passed after the startup or the radar mode change. In one or more embodiments, identifying the control setting includes accessing the DCXO control setting stored in a lookup table for the measured temperature or performing a mathematical calculation to identify the control setting. In one or more embodiments, identifying the DCXO control setting includes accessing a respective DCXO control setting stored in a lookup table for two or more different temperatures and interpolating or extrapolating the DCXO control setting for the measured temperature based on the DCXO control settings of the different temperatures. In one or more embodiments, the method further includes determining whether the clocks are time and frequency synchronized after the adjustment and based on the clocks not being time and frequency synchronized, output an indication that a condition for bi-static mode in the DCR system is not met until a rate of change of the temperature is less than a threshold level. In one or more embodiments, the frequency drift of the DCXO of the first radar is indicated by a crystal characteristic curve which indicates the frequency drift as a function of temperature. In one or more embodiments, the DCXO control setting for a desired frequency drift adjustment of the DCXO of the first radar is defined by a frequency drift adjustment to DCXO control setting curve. In one or more embodiments, the method further includes storing the DCXO control setting in a look- up table for the measured temperature of the DCXO of the first radar when the radars are time and frequency synchronized. In one or more embodiments, the method further includes determining a temperature indicative of a temperature of a digitally controlled crystal oscillator (DCXO) of the second radar at a same time the measured temperature is determined, wherein the control setting is based on the determined measured temperature of the first radar and determined temperature of the second radar. In one or more embodiments, time synchronization is based on Institute of Electrical and Electronic Engineers (IEEE) 802.1 AS, the radars in the DCR system are generalized precision time controlled (gPTP) slaves, and an electronic control unit (ECU) in the DCR system is a gPTP grandmaster.

In one or more second embodiments, a distributed coherent radar (DCR) system is disclosed. The DCR includes a first radar and a second radar, each radar having a respective digitally controlled crystal oscillator (DCXO), a temperature sensor, and a clock; and an electronic control unit (ECU); wherein a first radar is arranged to determine that the first radar is being started up or a mode of the first radar is being changed; obtain a measured temperature based on the determination, the measured temperature indicative of a temperature of the digitally controlled crystal oscillator (DCXO) of the first radar; identify a DCXO control setting of the first radar based on the measured temperature to reduce a frequency drift of the DCXO of the first radar and frequency drift difference between the DCXO of the first radar and DCXO of the second radar; and adjust the DCXO of the first radar with the DCXO control setting, wherein the DCXO of the first radar and DCXO of the second radar defines a timing for clocks of respective radars and the adjustment maintains synchronization between the clocks. In one or more embodiments, the first radar arranged to determine that the first radar is being started up or the mode of the first radar is being changed includes the first radar being arranged to determine that less than a predetermined time has passed after the startup or the mode of the first radar is changed. In one or more embodiments, the first radar is arranged to determine a temperature indicative of a temperature of a digitally controlled crystal oscillator (DCXO) of the second radar at a same time the measured temperature is determined, wherein the control setting is based on the determined measured temperature of the first radar and determined temperature of the second radar. In one or more embodiments, the first radar arranged to determine the DCXO control setting includes the first radar arranged to access a respective DCXO control setting stored in a lookup table for two or more different temperatures and interpolating or extrapolating the DCXO control setting for the measured temperature based on the DCXO control settings of the different temperatures. In one or more embodiments, the DCR further includes the first radar arranged to determine whether the clocks are time and frequency synchronized after the adjustment and based on the clocks not being time and frequency synchronized, output an indication that a condition for bi-static mode in the DCR system is not met until a rate of change of the temperature is less than a threshold level. In one or more embodiments, the frequency drift of the DCXO of the first radar is indicated by a crystal characteristic curve which indicates the frequency drift as a function of temperature. In one or more embodiments, the DCXO control setting for a desired frequency drift adjustment of the DCXO of the first radar is defined by a frequency drift adjustment to DCXO control setting curve. In one or more embodiments, time synchronization is based on Institute of Electrical and Electronic Engineers (IEEE) 802.1 AS, the radars in the DCR system are generalized precision time controlled (gPTP) slaves, and an electronic control unit (ECU) in the DCR system is a gPTP grandmaster.

In one or more third embodiments, a first radar is disclosed. The first radar is arranged to determine that the first radar is being started up or a mode of the first radar is being changed; obtain measured temperatures based on the determination, the measured temperatures indicative of a temperature of a digitally controlled crystal oscillator (DCXO) of the first radar and second radar; identify a DCXO control setting of the DCXO of the first radar based the measured temperatures to reduce a frequency drift of the DCXO of the first radar and frequency drift difference between the DCXO of the first radar and DCXO of the second radar; and adjust the DCXO of the first radar with the DCXO control setting, wherein the DCXO of the first radar and DCXO of the second radar defines timing for clocks of respective radars and the adjustment maintains synchronization between the clocks.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

## Claims

1. A method performed by a distributed coherent radar, DCR, system to maintain synchronization between clocks of two or more radars in the DCR system, the method comprising:
determining that a first radar is being started up or a mode of the first radar is being changed;
obtaining a measured temperature based on the determination, the measured temperature indicative of a temperature of a digitally controlled crystal oscillator, DCXO, of the first radar;
identifying a DCXO control setting of the DCXO of the first radar based on the measured temperature to reduce a frequency drift of the DCXO of the first radar and frequency drift difference between the DCXO of the first radar and DCXO of a second radar; and
adjusting the DCXO of the first radar with the DCXO control setting, wherein the DCXO of the first radar and DCXO of the second radar defines a timing for clocks of respective radars and the adjustment maintains the synchronization between the clocks.

2. The method of claim 1, wherein determining that the first radar is being started up or the mode of the first radar is being changed comprises receiving an indication of the startup or radar mode change of the distributed coherent radar system from an application controlling the DCR system.

3. The method of claim 2, wherein determining that the first radar is being started up or the mode of the first radar is being changed further comprises determining that less than a predetermined time has passed after the startup or the radar mode change.

4. The method of any preceding claim, wherein identifying the control setting comprises accessing the DCXO control setting stored in a lookup table for the measured temperature or performing a mathematical calculation to identify the control setting.

5. The method of any preceding claim, wherein identifying the DCXO control setting comprises accessing a respective DCXO control setting stored in a lookup table for two or more different temperatures and interpolating or extrapolating the DCXO control setting for the measured temperature based on the DCXO control settings of the different temperatures.

6. The method of any preceding claim, further comprising determining whether the clocks are time and frequency synchronized after the adjustment and based on the clocks not being time and frequency synchronized, output an indication that a condition for bi-static mode in the DCR system is not met until a rate of change of the temperature is less than a threshold level.

7. The method of any preceding claim, wherein the frequency drift of the DCXO of the first radar is indicated by a crystal characteristic curve which indicates the frequency drift as a function of temperature.

8. The method of claim 7, wherein the DCXO control setting for a desired frequency drift adjustment of the DCXO of the first radar is defined by a frequency drift adjustment to DCXO control setting curve.

9. The method of any preceding claim, wherein time synchronization is based on Institute of Electrical and Electronic Engineers (IEEE) 802.1 AS, the radars in the DCR system are generalized precision time controlled (gPTP) slaves, and an electronic control unit (ECU) in the DCR system is a gPTP grandmaster.

10. A distributed coherent radar, DCR, system comprising:
a first radar and a second radar, each radar having a respective digitally controlled crystal oscillator, DCXO, a temperature sensor, and a clock; and
an electronic control unit, ECU;
wherein a first radar is arranged to determine that the first radar is being started up or a mode of the first radar is being changed; obtain a measured temperature based on the determination, the measured temperature indicative of a temperature of the digitally controlled crystal oscillator (DCXO) of the first radar; identify a DCXO control setting of the first radar based on the measured temperature to reduce a frequency drift of the DCXO of the first radar and frequency drift difference between the DCXO of the first radar and DCXO of the second radar; and adjust the DCXO of the first radar with the DCXO control setting, wherein the DCXO of the first radar and DCXO of the second radar defines a timing for clocks of respective radars and the adjustment maintains synchronization between the clocks.

11. The DCR of claim 10, wherein the first radar arranged to determine that the first radar is being started up or the mode of the first radar is being changed comprises the first radar being arranged to determine that less than a predetermined time has passed after the startup or the mode of the first radar is changed.

12. The DCR of claim 10 or 11, wherein the first radar is arranged to determine a temperature indicative of a temperature of a digitally controlled crystal oscillator (DCXO) of the second radar at a same time the measured temperature is determined, wherein the control setting is based on the determined measured temperature of the first radar and determined temperature of the second radar.

13. The DCR of any of claims 10 to 12, wherein the first radar arranged to determine the DCXO control setting comprises the first radar arranged to access a respective DCXO control setting stored in a lookup table for two or more different temperatures and interpolating or extrapolating the DCXO control setting for the measured temperature based on the DCXO control settings of the different temperatures.

14. The DCR of any of claims 10 to 13, further comprising the first radar arranged to determine whether the clocks are time and frequency synchronized after the adjustment and based on the clocks not being time and frequency synchronized, output an indication that a condition for bi-static mode in the DCR system is not met until a rate of change of the temperature is less than a threshold level.

15. The DCR of any of claims 10 to 14, wherein the frequency drift of the DCXO of the first radar is indicated by a crystal characteristic curve which indicates the frequency drift as a function of temperature.

## Amended claims

### Amended claims in accordance with Rule 137(2) EPC.

1. A method performed by a distributed coherent radar, DCR, system (100) to maintain synchronization between clocks of two or more radars (102, 104) in the DCR system, the method comprising:
determining that a first radar is being started up or a mode of the first radar is being changed;
obtaining a measured temperature based on the determination, the measured temperature indicative of a temperature of a digitally controlled crystal oscillator, DCXO (118), of the first radar;
identifying a DCXO control setting of the DCXO of the first radar based on the measured temperature to reduce a frequency drift of the DCXO of the first radar and frequency drift difference between the DCXO of the first radar and DCXO (130) of a second radar; and
adjusting the DCXO of the first radar with the DCXO control setting, wherein the DCXO of the first radar and DCXO of the second radar defines a timing for clocks of respective radars and the adjustment maintains the synchronization between the clocks.

2. The method of claim 1, wherein determining that the first radar is being started up or the mode of the first radar is being changed comprises receiving an indication of the startup or radar mode change of the distributed coherent radar system from an application controlling the DCR system.

3. The method of claim 2, wherein determining that the first radar is being started up or the mode of the first radar is being changed further comprises determining that less than a predetermined time has passed after the startup or the radar mode change.

4. The method of any preceding claim, wherein identifying the control setting comprises accessing the DCXO control setting stored in a lookup table for the measured temperature or performing a mathematical calculation to identify the control setting.

5. The method of any preceding claim, wherein identifying the DCXO control setting comprises accessing a respective DCXO control setting stored in a lookup table for two or more different temperatures and interpolating or extrapolating the DCXO control setting for the measured temperature based on the DCXO control settings of the different temperatures.

6. The method of any preceding claim, further comprising determining whether the clocks are time and frequency synchronized after the adjustment and based on the clocks not being time and frequency synchronized, output an indication that a condition for bi-static mode in the DCR system is not met until a rate of change of the temperature is less than a threshold level.

7. The method of any preceding claim, wherein the frequency drift of the DCXO of the first radar is indicated by a crystal characteristic curve which indicates the frequency drift as a function of temperature.

8. The method of claim 7, wherein the DCXO control setting for a desired frequency drift adjustment of the DCXO of the first radar is defined by a frequency drift adjustment to DCXO control setting curve.

9. The method of any preceding claim, wherein time synchronization is based on Institute of Electrical and Electronic Engineers (IEEE) 802.1 AS, the radars in the DCR system are generalized precision time controlled (gPTP) slaves, and an electronic control unit (ECU) in the DCR system is a gPTP grandmaster.

10. A distributed coherent radar, DCR, system (100) comprising:
a first radar (102) and a second radar (104), each radar having a respective digitally controlled crystal oscillator, DCXO (118, 130), a temperature sensor (126, 138), and a clock (124, 136); and
an electronic control unit, ECU (106);
wherein a first radar is arranged to determine that the first radar is being started up or a mode of the first radar is being changed; obtain a measured temperature based on the determination, the measured temperature indicative of a temperature of the digitally controlled crystal oscillator, DCXO, of the first radar; identify a DCXO control setting of the first radar based on the measured temperature to reduce a frequency drift of the DCXO of the first radar and frequency drift difference between the DCXO of the first radar and DCXO of the second radar; and adjust the DCXO of the first radar with the DCXO control setting, wherein the DCXO of the first radar and DCXO of the second radar defines a timing for clocks of respective radars and the adjustment maintains synchronization between the clocks.

11. The DCR of claim 10, wherein the first radar arranged to determine that the first radar is being started up or the mode of the first radar is being changed comprises the first radar being arranged to determine that less than a predetermined time has passed after the startup or the mode of the first radar is changed.

12. The DCR of claim 10 or 11, wherein the first radar is arranged to determine a temperature indicative of a temperature of a digitally controlled crystal oscillator, DCXO, of the second radar at a same time the measured temperature is determined, wherein the control setting is based on the determined measured temperature of the first radar and determined temperature of the second radar.

13. The DCR of any of claims 10 to 12, wherein the first radar arranged to determine the DCXO control setting comprises the first radar arranged to access a respective DCXO control setting stored in a lookup table for two or more different temperatures and interpolating or extrapolating the DCXO control setting for the measured temperature based on the DCXO control settings of the different temperatures.

14. The DCR of any of claims 10 to 13, further comprising the first radar arranged to determine whether the clocks are time and frequency synchronized after the adjustment and based on the clocks not being time and frequency synchronized, output an indication that a condition for bi-static mode in the DCR system is not met until a rate of change of the temperature is less than a threshold level.

15. The DCR of any of claims 10 to 14, wherein the frequency drift of the DCXO of the first radar is indicated by a crystal characteristic curve which indicates the frequency drift as a function of temperature.
